# EUROPEAN PATENT SPECIFICATION

(11) **EP 2 654 107 B1**
(45) Date of publication and mention of the grant of the patent: **04.12.2019**
(21) Application number: 11848928.5
(22) Date of filing: 12.12.2011
(51) Int. Cl.: H01M 4/133, H01M 4/1393, H01M 4/36, H01M 4/58, H01M 4/587, H01M 10/0525, H01M 10/0566, H01M 4/02

(54) **NEGATIVE ELECTRODE FOR NON-AQUEOUS ELECTROLYTE SECONDARY BATTERY, NON-AQUEOUS ELECTROLYTE SECONDARY BATTERY AND PRODUCTION METHOD FOR NEGATIVE ELECTRODE FOR NON-AQUEOUS ELECTROLYTE SECONDARY BATTERY**
NEGATIVELEKTRODE FÜR EINE SEKUNDÄRBATTERIE MIT NICHTWÄSSRIGEM ELEKTROLYT, SEKUNDÄRBATTERIE MIT NICHTWÄSSRIGEM ELEKTROLYT UND VERFAHREN ZUR HERSTELLUNG DER NEGATIVELEKTRODE FÜR EINE SEKUNDÄRBATTERIE MIT NICHTWÄSSRIGEM ELEKTROLYT
ÉLECTRODE NÉGATIVE POUR BATTERIE SECONDAIRE À ÉLECTROLYTE NON AQUEUX, BATTERIE SECONDAIRE À ÉLECTROLYTE NON AQUEUX, ET PROCÉDÉ DE PRODUCTION D'ÉLECTRODE NÉGATIVE POUR BATTERIE SECONDAIRE À ÉLECTROLYTE NON AQUEUX

(30) Priority: 17.12.2010 JP 2010282291; 17.12.2010 JP 2010282295; 17.12.2010 JP 2010282296; 17.12.2010 JP 2010282298
(43) Date of publication of application: 23.10.2013
(73) Proprietor: Eliiy Power Co., Ltd., Shinagawa-ku, Tokyo 141-0032 (JP)
(72) Inventor: HARA, Tomitaro, Tokyo 141-0032 (JP); FUKUNAGA, Takao, Tokyo 141-0032 (JP); IGUCHI, Takayasu, Tokyo 141-0032 (JP)
(74) Representative: Zanoli, Enrico
(86) International application number: PCT/JP2011/078707
(87) International publication number: WO 2012/081553

(56) References cited:
- JP-A- 10 241 683
- JP-A- 11 219 704
- JP-A- H09 147 862
- JP-A- 2000 138 061
- JP-A- 2001 023 638
- JP-A- 2002 175 810
- JP-A- 2002 348 109
- JP-A- 2008 251 403
- JP-A- 2009 134 970
- JP-A- 2010 092 649
- US-A- 2 775 549
- US-A1- 2009 242 830

## Description

### TECHNICAL FIELD

The present invention relates to a negative electrode for a nonaqueous electrolyte secondary battery, a nonaqueous electrolyte secondary battery and a method for producing a negative electrode for a nonaqueous electrolyte secondary battery.

### BACKGROUND ART

It is well known that graphite having high energy density per unit volume is used as a negative-electrode active material for a nonaqueous electrolyte secondary battery, in particular, for a lithium-ion secondary battery. Especially, graphitized mesophase microspheres are generally used as the negative-electrode active material as having superior initial charging characteristics and electrode-packing properties (see Patent Document 1, for example).

However, the graphitized mesophase microspheres are costly since they are produced through complicated processes, and besides the level of the durability thereof is not satisfactory enough. Therefore, graphite materials which are more suitable for the negative-electrode active material are being sought.

As a graphite material suitable for the negative-electrode active material, coke-based graphite obtained by graphitizing coke which is less costly and has good durability is becoming known and being developed.

JP H09 147862 A describes a negative electrode active material for a lithium secondary battery comprising a scale-like graphite and non-flake carbon material. The negative-electrode active material layer includes flaky graphite particles formed by graphitizing needle coke, particulate graphite particles formed by graphitizing coke, and a binder.

US 2775549 A describes the production of coke from petroleum hydrocarbons. The needle-like coke produced is useful in the production of graphite electrodes for electric furnaces, and the graphite electrodes produced from this coke are characterized by lower resistivity and lower coefficient of thermal expansion.

US 2009/242830 A1 describes anode powders for batteries, in particular a process of producing a powder of coated carbonaceous material. The process includes milling regular coke into coke particles and depositing a coating of carbon residue forming material onto surfaces of the coke particles.

### CITATION LIST

### PATENT DOCUMENT

Patent Document 1: Japanese Unexamined Patent Publication No. 2010-140795

### DISCLOSURE OF THE INVENTION

### PROBLEM TO BE SOLVED BY THE INVENTION

However, the coke-based graphite has a high degree of hardness, and it is therefore difficult to control its shape. Furthermore, slurries including the coke-based graphite for formation of a negative-electrode active material layer generally have poor flowability, and therefore the graphite packing density in the negative-electrode active material layer is low.

In view of the above-described circumstances, the present invention has been achieved to provide a negative electrode for a nonaqueous electrolyte secondary battery, the negative electrode being produced at reduced costs, having a high graphite packing density, and having stable quality.

### MEANS FOR SOLVING THE PROBLEMS

The present invention provides a negative electrode for a nonaqueous electrolyte secondary battery, comprising a negative-electrode current collector; and a negative-electrode active material layer provided on the negative-electrode current collector, characterized as defined in claim 1.

### EFFECT OF THE INVENTION

According to the present invention, the negative-electrode active material layer includes the flaky graphite particles and the particulate graphite particles. Accordingly, the negative-electrode active material layer can be formed to have less large voids between the graphite particles, and therefore the graphite packing density can be increased. As a result, the ion storage capacity of the negative electrode can be increased.

According to the present invention, the flaky graphite particles and the particulate graphite particles included in the negative-electrode active material layer are both coke-based graphite particles and have similar hardness. Accordingly, it is possible to prevent the graphite particles from being damaged and deformed when the negative-electrode active material layer is formed. As a result, the properties of the negative-electrode active material layer can be stabilized. In addition, the rate of volumetric change of the coke-based graphite particles is small even when it is subjected to charge and discharge of the secondary battery. Accordingly, damage of the negative-electrode active material layer due to the volumetric change of the graphite particles can be prevented.

### BRIEF DESCRIPTION OF THE DRAWINGS

- Fig. 1 (a) is a schematic plan view of a negative electrode for a nonaqueous electrolyte secondary battery of an embodiment of the present invention, and Fig. 1 (b) is a schematic cross sectional view of the negative electrode taken along a dotted line A-A in Fig. 1 (a).
- Fig. 2 is a schematic cross sectional view of a region B of the negative electrode for a nonaqueous electrolyte secondary battery enclosed by a dotted line in Fig. 1 (b).
- Fig. 3 is a diagram for illustrating diameters of a particle in a schematic cross sectional view of a negative electrode for a nonaqueous electrolyte secondary battery of an embodiment of the present invention.
- Fig. 4 is a schematic top view of a nonaqueous electrolyte secondary battery of an embodiment of the present invention.
- Fig. 5 is a schematic side view of the nonaqueous electrolyte secondary battery of the embodiment of the present invention.
- Fig. 6 is a schematic cross sectional view of the nonaqueous electrolyte secondary battery taken along a dotted line C-C in Fig. 4.
- Fig. 7 is a schematic cross sectional view of the nonaqueous electrolyte secondary battery taken along a dotted line D-D in Fig. 5.
- Fig. 8 (a) is a schematic plan view of a positive electrode included in the nonaqueous electrolyte secondary battery of the embodiment of the present invention, and Fig. 8 (b) is a schematic cross sectional view of the positive electrode taken along a dotted line E-E in Fig. 8 (a).
- Fig. 9 is a photograph of a cross section of a negative electrode prepared in Example 1 in a graphite packing property evaluation experiment.
- Fig. 10 is a photograph of a cross section of a negative electrode prepared in Comparative Example 1 in the graphite packing property evaluation experiment.
- Fig. 11 is a photograph of a side surface of a part of a negative-electrode active material layer of the negative electrode prepared in Example 1 in the graphite packing property evaluation experiment after the part of the negative-electrode active material layer was crushed.
- Fig. 12 is a photograph of a side surface of a part of a negative-electrode active material layer of the negative electrode prepared in Comparative Example 1 in the graphite packing property evaluation experiment after the part of the negative-electrode active material layer was crushed.
- Fig. 13 is a photograph of an upper surface of the negative-electrode active material layer of the negative electrode prepared in Comparative Example 1 in the graphite packing property evaluation experiment.
- Fig. 14 is a photograph of a side surface of a part of the negative-electrode active material layer of the negative electrode prepared in Comparative Example 1 in the graphite packing property evaluation experiment after the part of the negative-electrode active material layer was crushed.
- Fig. 15 is a photograph of a side surface of a part of the negative-electrode active material layer of the negative electrode prepared in Comparative Example 1 in the graphite packing property evaluation experiment after the part of the negative-electrode active material layer was crushed.
- Fig. 16 is a graph showing the pore distribution in the negative-electrode active material layers measured in a porosimetry experiment.

### MODE FOR CARRYING OUT THE INVENTION

A negative electrode for a nonaqueous electrolyte secondary battery of the present invention is characterized in that it comprises: a negative-electrode current collector; and a negative-electrode active material layer provided on the negative-electrode current collector, and the negative-electrode active material layer includes: flaky graphite particles formed by graphitizing needle coke; particulate graphite particles formed by graphitizing coke; and a binder.

Preferably, in the negative electrode for a nonaqueous electrolyte secondary battery of the present invention, the negative-electrode active material layer has a graphite packing density of 0.95 g/cm³ to 1.19 g/cm³, a porosity of 37.0% to 45% and an average pore diameter of 1 µm to 1.2 µm.

When the negative-electrode active material layer has a graphite packing density of 0.95g/cm³ to 1.19g/cm³, it is possible to achieve a larger ion storage capacity of the negative electrode. In addition, when the negative-electrode active material layer has a porosity of 37.0% to 45% and an average pore diameter of 1 µm to 1.2 µm, the negative-electrode active material layer can have a high graphite packing density, and an electrolytic solution in the negative-electrode active material layer can be distributed, and the reactivity of a lithium intercalation and deintercalation reaction in graphite surfaces can be increased.

Preferably, in the negative electrode for a nonaqueous electrolyte secondary battery of the present invention, when an upper surface of the negative-electrode active material layer is pressed at a pressure of 200 kg/cm² (19.6 MPa), the negative-electrode active material layer has a thickness of 91% or more of a thickness of the negative-electrode active material layer not pressed.

According to this structure, it is possible to achieve a higher graphite packing density and a larger ion storage capacity of the negative electrode even without pressing the negative-electrode active material layer.

Preferably, in the negative electrode for a nonaqueous electrolyte secondary battery of the present invention, the flaky graphite particles are arranged in such a manner that one surface of each flaky graphite particle is substantially in parallel with an upper surface of the negative-electrode current collector.

According to this structure, it is possible to achieve a higher graphite packing density in the negative-electrode active material layer. In addition, it is possible to easily control the thickness of the negative-electrode active material layer. Furthermore, it is possible to cause the volume of the graphite to change in a direction perpendicular to the upper surface of the negative-electrode current collector upon charge and discharge of the secondary battery to improve the stability of the negative-electrode active material layer.

Preferably, in the negative electrode for a nonaqueous electrolyte secondary battery of the present invention, the flaky graphite particles have a 2 to 15 times as long average major diameter as the particulate graphite particles in a cross section of the negative-electrode active material layer perpendicular to an upper surface of the negative-electrode active material layer.

According to this structure, the particulate graphite particles can be present between the flaky graphite particles and function as a cushioning medium, and it is therefore possible to achieve a higher graphite packing density in the negative-electrode active material layer.

Preferably, in the negative electrode for a nonaqueous electrolyte secondary battery of the present invention, the flaky graphite particles have a 0.8 to 1.5 times as large total cross sectional area as the particulate graphite particles in the cross section of the negative-electrode active material layer perpendicular to the upper surface of the negative-electrode active material layer.

According to this structure, the particulate graphite particles can fill voids formed by the flaky graphite particles.

In the negative electrode for a nonaqueous electrolyte secondary battery of the present invention, the flaky graphite particles have an aspect ratio of a particle diameter in an in-plane direction to a thickness of 6 to 80.

According to this structure, it is possible to arrange the flaky graphite particles substantially in parallel with the upper surface of the negative-electrode current collector. Preferably, in the negative electrode for a nonaqueous electrolyte secondary battery of the present invention, the flaky graphite particles have an average thickness of 0.2 µm to 4 µm and an average particle diameter in the in-plane direction of 6 µm to 30 µm.

According to this structure, it is possible to arrange the flaky graphite particles substantially in parallel with the upper surface of the negative-electrode current collector. In addition, it is possible to appropriately provide the voids between the flaky graphite particles, so that the electrolytic solution can be distributed through the voids.

In the negative electrode for a nonaqueous electrolyte secondary battery of the present invention, the particulate graphite particles have an average particle diameter larger than the average thickness of the flaky graphite particles and smaller than the average particle diameter in the in-plane direction of the flaky graphite particles.

According to this structure, the particulate graphite particles can fill the voids formed by the flaky graphite particles.

Preferably, in the negative electrode for a nonaqueous electrolyte secondary battery of the present invention, the particulate graphite particles have an average particle diameter of 1 µm to 10 µm.

According to this structure, pores between the graphite particles can have an appropriate pore diameter, and the electrolytic solution can be distributed in the negative-electrode active material layer.

Preferably, in the negative electrode for a nonaqueous electrolyte secondary battery of the present invention, at least a surface of an edge portion of each particulate graphite particle is coated with graphite.

According to this structure, the surfaces of the particulate graphite particles can be smoothed, and generation of large voids in the negative-electrode active material layer can be prevented. The present invention also provides a nonaqueous electrolyte secondary battery comprising: a negative electrode of the present invention; a positive electrode; a separator interposed between the negative electrode and the positive electrode; an organic electrolytic solution; a case for containing the negative electrode, the positive electrode, the separator and the organic electrolytic solution; a positive-electrode connection terminal; and a negative-electrode connection terminal, characterized in that the positive electrode is electrically connected to the positive-electrode connection terminal, and the negative electrode is electrically connected to the negative-electrode connection terminal.

According to the nonaqueous electrolyte secondary battery of the present invention, the negative electrode has a high graphite packing density and stable quality, and it is therefore possible to steadily provide a secondary battery having a large battery capacity.

Preferably, in the nonaqueous electrolyte secondary battery of the present invention, the positive electrode includes a positive-electrode current collector and a positive-electrode active material layer provided on the positive-electrode current collector, and the positive-electrode active material layer contains an olivine-type lithium metal phosphate compound.

According to this structure, the positive electrode can have a larger capacity.

The present invention also provides a method for producing a negative electrode for a nonaqueous electrolyte secondary battery, comprising the steps of: forming a slurry by mixing flaky graphite particles formed by graphitizing needle coke, particulate graphite particles formed by graphitizing coke, a binder and a solvent; and applying and drying the slurry on a negative-electrode current collector.

According to the method for producing a negative electrode for a nonaqueous electrolyte secondary battery of the present invention, a negative electrode having a high graphite packing density and stable quality can be produced.

Preferably, in the method for producing a negative electrode for a nonaqueous electrolyte secondary battery of the present invention, the amount of the flaky graphite particles is 40 percent by mass to 70 percent by mass, and the amount of the particulate graphite particles is 30 percent by mass to 60 percent by mass where the total amount of the flaky graphite particles and the particulate graphite particles is 100 percent by mass in the step of forming the slurry.

According to this structure, a negative-electrode active material layer having a high graphite packing density can be produced.

Preferably, the method for producing a negative electrode for a nonaqueous electrolyte secondary battery of the present invention further comprises the step of coating a surface of each particulate graphite particle with a carbon-containing material and graphitizing the carbon-containing material.

According to this structure, the surfaces of the particulate graphite particles can be smoothed, and a negative-electrode active material layer having a high graphite packing density can be produced.

Hereinafter, an embodiment of the present invention will be described with reference to the drawings. Structures shown in the drawings or the following descriptions are just exemplifications and the scope of the present invention is not limited thereto.

### Structure and production method of negative electrode for nonaqueous electrolyte secondary battery

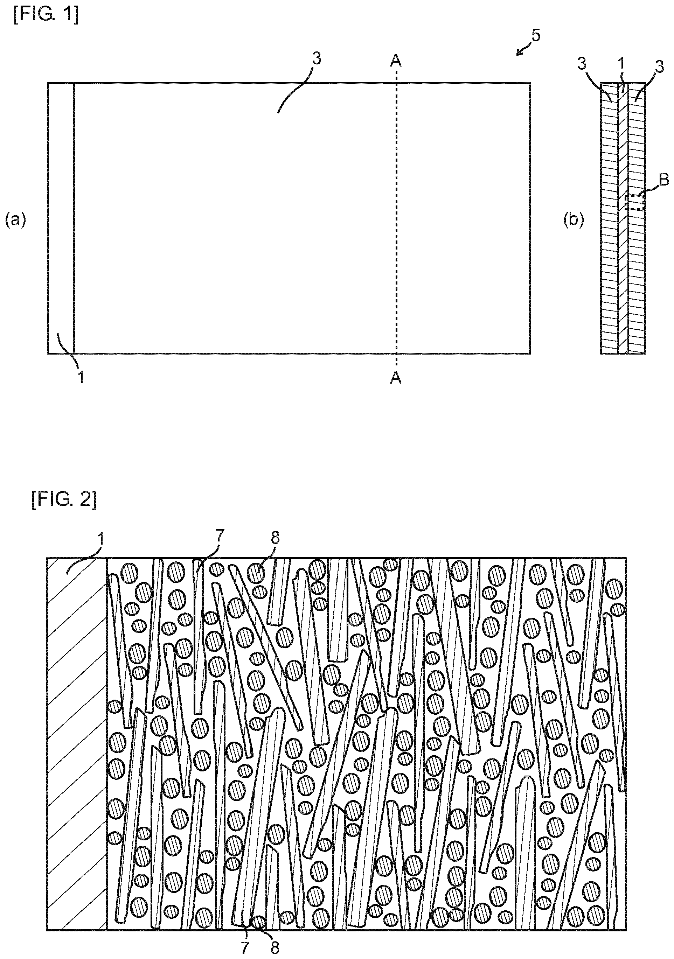

Fig. 1 (a) is a schematic plan view of a negative electrode for a nonaqueous electrolyte secondary battery of the present embodiment, and Fig. 1 (b) is a schematic cross sectional view of the negative electrode taken along a dotted line A-A in Fig. 1 (a). Fig. 2 is a schematic cross sectional view of a region B of the negative electrode for a nonaqueous electrolyte secondary battery enclosed by a dotted line in Fig. 1 (b).

A negative electrode 5 for a nonaqueous electrolyte secondary battery of the present embodiment is characterized in that it comprises a negative-electrode current collector 1 and a negative-electrode active material layer 3 provided on the negative-electrode current collector 1, and the negative-electrode active material layer 3 includes flaky graphite particles 7 formed by graphitizing needle coke, particulate graphite particles 8 formed by graphitizing coke and a binder.

Hereinafter, the negative electrode for a nonaqueous electrolyte secondary battery of the present embodiment will be described.

### 1. Negative-electrode current collector

The negative-electrode current collector 1 is not particularly limited as long as it has electrical conductivity and can have the negative-electrode active material layer 3 on a surface thereof. Examples thereof include metal foil. Preferably, the negative-electrode current collector 1 is copper foil.

### 2. Negative-electrode active material layer

The negative-electrode active material layer 3 is provided on the negative-electrode current collector 1. In addition, the negative-electrode active material layer 3 includes the flaky graphite particles 7 formed by graphitizing needle coke, the particulate graphite particles 8 formed by graphitizing coke and the binder. The negative-electrode active material layer 3 may be an aggregate including the flaky graphite particles 7, the particulate graphite particles 8 and the binder.

Including the flaky graphite particles 7 and the particulate graphite particles 8 (hereinafter, they are also referred to as graphite particles), the negative-electrode active material layer 3 has voids between the graphite particles. In the case of a nonaqueous electrolyte secondary battery, an electrolytic solution is present in these voids, and a lithium intercalation and deintercalation reaction occurs at interfaces between the electrolytic solution and the graphite particles. When the voids are too small, distribution of the electrolytic solution in the negative-electrode active material layer 8 is hindered or ionic conduction of the electrolytic solution is hindered, and therefore the battery capacity may be reduced or the battery reactivity may be reduced. When the voids are too large, on the other hand, the graphite packing density in the negative-electrode active material layer 3 will be reduced, and therefore the ion storage capacity of the negative-electrode active material layer 3 will be reduced. Furthermore, since the lithium intercalation and deintercalation reaction occurs at the interfaces between the graphite particles and the electrolytic solution, the reactivity of the lithium intercalation and deintercalation reaction can be increased by increasing the interfaces as much as possible. The voids between the graphite particles included in the negative-electrode active material layer 3 therefore need to have an appropriate size. The voids between the graphite particles included in the negative-electrode active material layer 3 can be evaluated by performing porosimetry on the negative-electrode active material layer 3 with a porosimeter. The porosimetry can determine pore volume (mL/g), pore surface area (m2/g), median pore diameter (µm), mode pore diameter (µm), porosity (%) and the like. In addition, the graphite packing density in the negative-electrode active material layer 3 can be determined from these results.

The graphite packing density in the negative-electrode active material layer 3 may be 0.95 g/cm3 to 1.19 g/cm3, for example. The porosity of the negative-electrode active material layer 3 may be 37.0% to 45%, for example. The average pore diameter (median diameter or mode diameter) of the pores in the negative-electrode active material layer 3 may be 1 µm to 1.2 µm, for example.

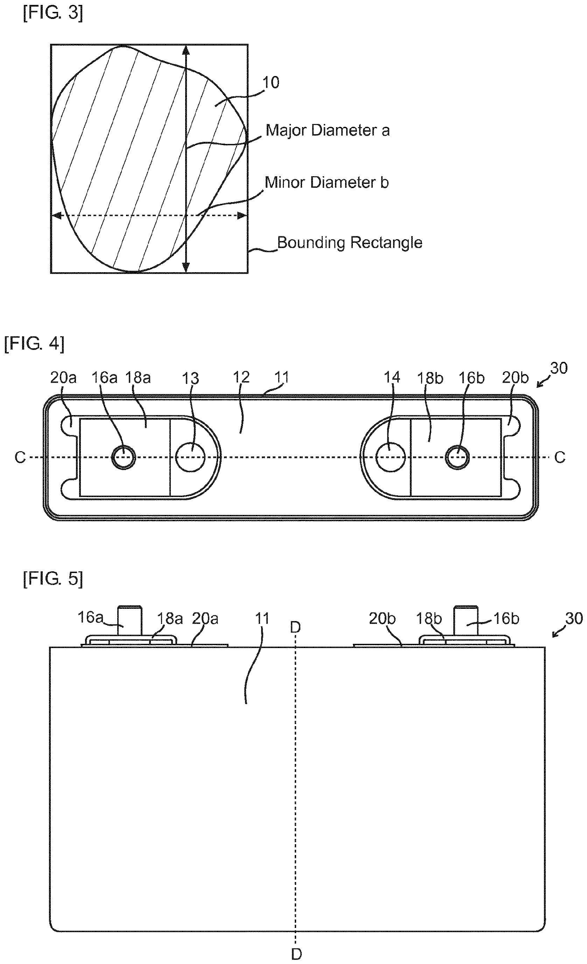

The negative-electrode active material layer 3 has a cross section as illustrated in Fig. 2, for example. A major diameter a and a minor diameter b of each graphite particle in the cross section as illustrated in Fig. 2 will be described with reference to Fig. 3. When a bounding rectangle is drawn around a particle 10 illustrated in Fig. 3 so that the distance between the short sides is the longest distance, the distance a between the short sides is defined as the major diameter a of the particle 10, and the distance b between the long sides is defined as the minor diameter b of the particle 10. The cross section of the negative-electrode active material layer 3 as illustrated in Fig. 2 can be evaluated by observing the cross section of the negative-electrode active material layer 3 by SEM.

Each flaky graphite particle 7 is in the form of flakes having a scale-like shape. Accordingly, the flaky graphite particle 7 has a long and narrow cross section, and the aspect ratio of the major diameter a to the minor diameter b (a/b) is relatively large in the cross section of the negative-electrode active material layer 3 perpendicular to an upper surface of the negative-electrode active material layer 3 as illustrated in Fig. 2.

Each particulate graphite particle 8 has a particulate shape. Accordingly, the particulate graphite particle 8 has a smaller aspect ratio than the aspect ratio of the flaky graphite particle 7 in the cross section of the negative-electrode active material layer 3 perpendicular to the upper surface of the negative-electrode active material layer 3 as illustrated in Fig. 2.

Thus, the flaky graphite particles 7 and the particulate graphite particles 8 can be distinguished from each other according to the aspect ratio in the cross section as illustrated in Fig. 2. For example, the graphite particles having an aspect ratio of 6 to 80 can be considered the flaky graphite particles, and the graphite particles having an aspect ratio not more than 4 can be considered the particulate graphite particles.

In the cross section of the negative-electrode active material layer 3 perpendicular to the upper surface of the negative-electrode active material layer 3 as illustrated in Fig. 2, the average major diameter, the average minor diameter and the average aspect ratio of the flaky graphite particles 7 and the particulate graphite particles 8 can be determined by averaging major diameters, minor diameters and aspect ratios of the flaky graphite particles 7 or the particulate graphite particles 8 included in a specified cross section. These average values can be determined by averaging values of approximately 100 flaky graphite particles 7 or particulate graphite particles 8, for example.

In addition, from the cross section of the negative-electrode active material layer 3 perpendicular to the upper surface of the negative-electrode active material layer 3 as illustrated in Fig. 2, the cross sectional area of the flaky graphite particles 7 and the cross sectional area of the particulate graphite particles 8 can be determined.

The mixing ratio between the flaky graphite particles 7 and the particulate graphite particles 8 included in the negative-electrode active material layer 3 can be found by comparing the total cross sectional area of the flaky graphite particles 7 and the total cross sectional area of the particulate graphite particles 8 included in a specified cross section of the negative-electrode active material layer 3.

In the cross section as illustrated in Fig. 2, the total cross sectional area of the flaky graphite particles 7 may be 0.8 to 1.5 times the total cross sectional area of the particulate graphite particles, for example.

The negative-electrode active material layer 3 can be formed by mixing the flaky graphite particles 7, the particulate graphite particles 8, the binder and a solvent to prepare a slurry, and applying and drying the slurry on the negative-electrode current collector 1. If necessary, the viscosity may be controlled by adding a thickener to the slurry. As described above, the negative electrode 5 for a nonaqueous electrolyte secondary battery can be formed.

The negative electrode 5 formed in such a manner may be or may not be subjected to a pressing step after the drying. The negative electrode 5 has a sufficient graphite packing density and can be formed relatively thin even without the pressing step. Accordingly, the negative electrode 5 can be used for a nonaqueous electrolyte secondary battery without the pressing step. Alternatively, the pressing step may be performed as needed. Preferably, the pressing pressure of a rolling press machine for pressing the negative electrode 5 is 200 kg/cm² (19.6 MPa) or lower. When the pressing pressure is higher than 200 kg/cm² (19.6 MPa), foil of the negative-electrode current collector 1 may be elongated or the negative-electrode active material layer 3 may be broken. More preferably, the pressing pressure is 170 kg/cm² or lower.

The negative-electrode active material layer 3 formed by the above-described preparation method is an aggregate of the flaky graphite particles 7, the particulate graphite particles 8 and the binder.

### 3. Flaky graphite particles

The flaky graphite particles 7 are flaky coke-based graphite particles and have a very large aspect ratio. The flaky graphite particles 7 are formed by graphitizing needle coke. Therefore, the flaky graphite particles 7 have high hardness. Accordingly, the flaky graphite particles can be prevented from being partly crushed and from being deformed when the negative-electrode active material layer 3 is formed. As a result, the quality of the negative-electrode active material layer 3 can be stabilized.

In addition, since the graphite formed from needle coke is relatively inexpensive, the production costs can be reduced.

Furthermore, the use of the flaky graphite particles 7 allows an upper surface of the negative-electrode current collector 1 and one surface of each flaky graphite particle 7 to be arranged substantially in parallel with each other. This is because the flaky graphite particles 7 have orientation in the negative-electrode active material layer 3.

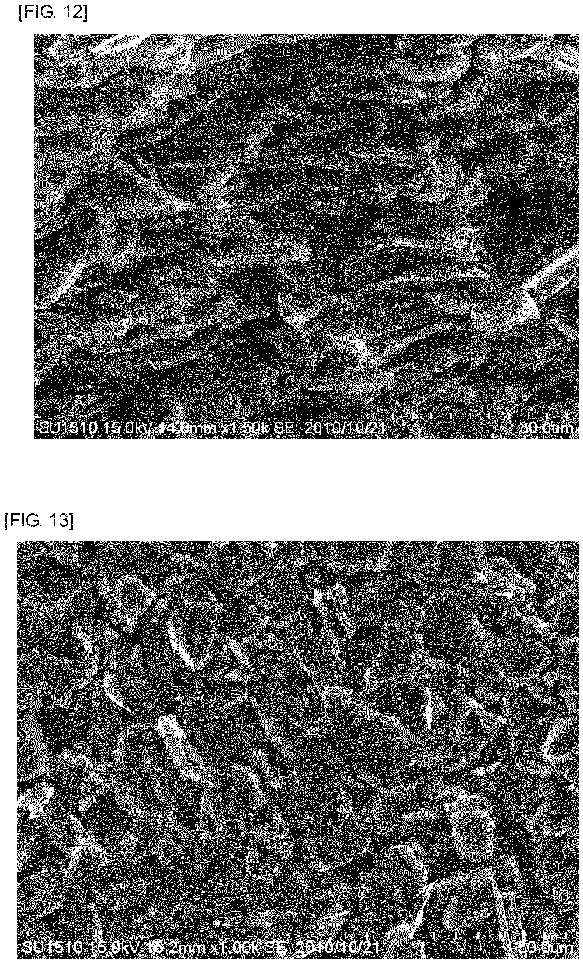

The flaky graphite particles 7 may have an average thickness of 0.2 µm to 4 µm and an average particle diameter in an in-plane direction of the flaky graphite particles 7 of 6 µm to 30 µm. The thickness of the flaky graphite particles 7 can be measured in such a photograph as shown in Fig. 12, and the particle diameter of the flaky graphite particles 7 in the in-plane direction can be measured in such a photograph as shown in Fig. 13. The average thickness can be calculated by averaging the thicknesses of the flaky graphite particles 7 measured in the photograph as shown in Fig. 12, and the average particle diameter can be calculated by averaging the particle diameters of the flaky graphite particles 7 measured in the photograph as shown in Fig. 13.

The ratio of the average particle diameter (d) of the flaky graphite particles 7 in the in-plane direction to the average thickness (c) of the flaky graphite particles 7 (d/c), that is, the aspect ratio may be 6 to 80. Preferably, the shape of the flaky graphite particles has an average thickness of 1 µm to 2 µm and an average particle diameter in the in-plane direction of 9 µm to 18 µm. When the average thickness and the average particle diameter in the in-plane direction of the flaky graphite particles 7 are too small, the voids between the graphite particles will be so small that the distribution of the electrolytic solution may be blocked. When the average thickness and the average particle diameter in the in-plane direction are too large, the voids between the graphite particles will be so large that the graphite packing rate may be reduced, and the interfaces between the graphite particles and the electrolytic solution may be decreased, reducing the reactivity of the lithium intercalation and deintercalation reaction.

When the aspect ratio of the flaky graphite particles 7 is too small, the orientation of the flaky graphite particles 7 is reduced. When the aspect ratio is too large, the surfaces of the flaky graphite particles on which the lithium intercalation and deintercalation reaction occurs are reduced.

As the flaky graphite particles 7, graphite particles obtained by pulverizing coal-based or petroleum-based needle coke into a desired size, and then graphitizing the pulverized needle coke by sintering under an inert atmosphere is preferable. The sintering temperature is preferably 2200 to 2800°C, and more preferably 2300 to 2600°C. When the sintering temperature is outside this range, various properties such as an average interlayer distance of the graphite particles, and crystallite sizes Lc and La will be out of desired ranges. More preferably, the flaky graphite particles 7 are graphite particles obtained by graphitizing petroleum-based needle coke. The petroleum-based needle coke includes less impurities and therefore improves battery characteristics when graphitized.

The average interlayer distance d002, which is determined by X-ray diffractometry on the flaky graphite particles 7 is preferably 0.3365 to 0.3375 nm, and more preferably 0.3367 to 0.3372 nm. When the average interlayer distance d002 of the graphite particles is shorter than the lower limit, the energy density per unit volume of the nonaqueous electrolyte secondary battery is likely to be insufficient. When the average interlayer distance d002 is longer than the upper limit, the rate of charging the nonaqueous electrolyte secondary battery is likely to be insufficient.

The crystallite size Lc in a c-axis direction, which is determined by X-ray diffractometry on the flaky graphite particles 7 is preferably 60 to 120 nm, and more preferably 80 to 100 nm. When the crystallite size Lc of the graphite particles is smaller than the lower limit, the energy density per unit volume of the nonaqueous electrolyte secondary battery will be insufficient. When the crystallite size Lc is larger than the upper limit, the charging rate will be insufficient.

The crystallite size La in an a-axis direction, which is determined by X-ray diffractometry on the flaky graphite particles 7 is preferably 100 to 250 nm, and more preferably 125 to 200 nm. When the crystallite size La of the graphite particles is smaller than the lower limit, the energy density per unit volume of the nonaqueous electrolyte secondary battery will be insufficient. When the crystallite size La is larger than the upper limit, the charging rate will be insufficient.

### 4. Particulate graphite particles

The particulate graphite particles 8 are particulate coke-based graphite particles.

By using the coke-based graphite particles as the particulate graphite particles 8, both the flaky graphite particles 7 and the particulate graphite particles 8 can be coke-based graphite particles, and the hardnesses of the flaky graphite particles 7 and the particulate graphite particles 8 can be similar. As a result, the quality of the negative-electrode active material layer 3 can be stabilized. That is, when one of the two types of graphite particles used is hard graphite particles and the other is relatively soft graphite particles, the soft graphite particles will be cut and broken by the hard graphite particles, causing change in shape such as the size and the aspect ratio of the graphite particles, and therefore the arrangement of the graphite particles and the pore distribution will be affected. Since graphite obtained by graphitizing needle coke at a moderate temperature is hard, in particular, the other graphite to be mixed therewith is preferably coke-based graphite having an equivalent hardness.

The average particle diameter of the particulate graphite particles 8 may be 1 to 10 µm. Preferably, the average particle diameter of the particulate coke-based graphite particles is 3 to 7 µm. It is not preferable that the average particle diameter of the particulate coke-based graphite particles is too small, because in this case the pores of the negative-electrode active material layer 3 are filled and the distribution of the electrolytic solution will be blocked. It is not preferable that the average particle diameter is too large, because in this case the arrangement of the flaky graphite particles will be hindered, causing reduction of the graphite packing rate.

Preferably, the average particle diameter of the particulate graphite particles 8 is smaller than the average particle diameter of the flaky graphite particles 7 in the in-plane direction. It is not preferable that the average particle diameter of the particulate graphite particles 8 is larger than the average particle diameter of the flaky graphite particles 7 in the in-plane direction, because in this case the arrangement of the flaky graphite particles 7 in the in-plane direction will be prevented from being substantially parallel. When the average particle diameter of the particulate graphite particles 8 is larger than the average particle diameter of the flaky graphite particles 7 in the in-plane direction, the flaky graphite particles 7 will be arranged along the particulate graphite particles 8, and the arrangement of the flaky graphite particles 7 in the in-plane direction will be curved and prevented from being substantially parallel. When the particulate graphite particles 8 are smaller than the flaky graphite particles 7, the particulate graphite particles 8 can come between surfaces of two flaky graphite particles 7, and therefore the arrangement of the flaky graphite particles 7 in the in-plane direction will not be prevented from being substantially parallel.

As the particulate graphite particles 8, desirably, graphite particles obtained by coating coke-based graphite particles to serve as cores so that whole surfaces or at least edge portions thereof are covered to give smoothed surfaces is used. The edge portions may be those in a direction of basal surfaces of the graphite particles.

Preferably, the coating material is a carbon material obtained by graphitizing a polymeric material selected from the group consisting of heavy aromatic residues from coal, petroleum and pitches of chemical process; lignin from pulp industry; phenolic resins; and carbohydrate materials. Having the edge portions smoothed by the attachment of or the covering with the polymer-derived carbon material, the coke-based graphite particles serving as a core graphite material has a reduced specific surface area and smoothed surfaces. Thus, the graphite material is made slippery.

The coated particulate graphite particles can be produced by attaching or applying the polymer to the particulate graphite particles and graphitizing the polymer by sintering. Specific examples of the method for attaching or applying the polymeric material include a method by dissolving the polymeric material in a solvent, mixing the particulate graphite particles with the polymer solution, and applying and drying the mixture; and a method by mixing and attaching the polymer by a dry process.

The average interlayer distance d002, which is determined by X-ray diffractometry on the particulate graphite particles 8 is preferably 0.3365 to 0.3375 nm, and more preferably 0.3367 to 0.3372 nm. When the average interlayer distance d002 of the graphite particles is shorter than the lower limit, the energy density per unit volume of the nonaqueous electrolyte secondary battery is likely to be insufficient. When the average interlayer distance d002 is longer than the upper limit, the rate of charging the nonaqueous electrolyte secondary battery is likely to be insufficient.

The crystallite size Lc in the c-axis direction, which is determined by X-ray diffractometry on the particulate graphite particles 8 is preferably 100 to 250 nm, and more preferably 140 to 220 nm. When the crystallite size Lc of the graphite particles is smaller than the lower limit, the energy density per unit volume of the nonaqueous electrolyte secondary battery will be insufficient. When the crystallite size Lc is larger than the upper limit, the charging rate will be insufficient.

The crystallite size La in the a-axis direction, which is determined by X-ray diffractometry on the particulate graphite particles 8 is preferably 200 to 280 nm, and more preferably 220 to 260 nm. When the crystallite size La of the graphite particles is smaller than the lower limit, the energy density per unit volume of the nonaqueous electrolyte secondary battery will be insufficient. When the crystallite size La is larger than the upper limit, the charging rate will be insufficient.

### 5. Ratio between flaky graphite particles and particulate graphite particles

The ratio by mass between the flaky graphite particles 7 and the particulate graphite particles 8 included in the negative-electrode active material layer 3, that is, flaky graphite particles: particulate graphite particles is preferably 4 : 6 to 7 : 3, and more preferably 4 : 6 to 6 : 4. Whichever graphite particles are too much, the arrangement of the graphite particles will go wrong or the pore distribution will not be within an appropriate range.

The ratio by mass between the flaky graphite particles 7 and the particulate graphite particles 8 included in the negative-electrode active material layer 3 remains unchanged from the ratio by mass between the flaky graphite particles 7 and the particulate graphite particles 8 included in the slurry for the formation of the negative-electrode active material layer 3, and therefore is the same as the ratio by mass between the flaky graphite particles 7 and the particulate graphite particles 8 when the slurry is prepared.

In the cross section of the negative-electrode active material layer 3 perpendicular to the upper surface of the negative-electrode active material layer 3, the ratio of the total cross sectional area of the flaky graphite particles 7 to the total cross sectional area of the particulate graphite particles 8 may be 4 : 6 to 7 : 3, and preferably 4 : 6 to 6 : 4.

### 6. Negative-electrode binder

The negative-electrode binder is used to bind the negative-electrode current collector 1, the flaky graphite particles 7 and the particulate graphite particles 8 together. Examples of the negative-electrode binder include organic solvent-based binders such as polyvinylidene fluoride (PVdF) and polytetrafluoroethylene (PTFE), which are dissolved in an organic solvent for use; water dispersible styrene-butadiene rubber; esters of ethylenically unsaturated carboxylic acid such as methyl (meth)acrylate, ethyl (meth)acrylate, butyl (meth)acrylate, (meth)acrylonitrile and hydroxyethyl (meth)acrylate; ethylenically unsaturated carboxylic acids such as acrylic acids, methacrylic acid, itaconic acid, fumaric acid and maleic acid; and water-based polymers such as carboxymethylcellulose (CMC). These binders may be used independently, or two or more kinds may be used as a mixture.

The negative-electrode binder can be mixed with the flaky graphite particles 7 and the particulate graphite particles 8 by dissolving it in a solvent when the slurry for the formation of the negative-electrode active material layer 3 is prepared. Examples of the solvent for dissolving the negative-electrode binder include dimethylformamide, N-methylpyrrolidone, isopropanol, toluene and water, from which one or more kinds may be selected as appropriate and as needed.

Preferably, the proportion of the binder to be mixed in the negative electrode is 4.5 to 8.5 parts by mass with respect to 100 parts by mass of the graphite particles. When the proportion is too small, the amount of the binder will be insufficient and the electrode cannot be formed. When the proportion is too large, the battery capacity will be reduced. In particular, it is not preferable that the proportion exceeds 8.5 parts by mass, because in this case the capacity of the negative electrode will be reduced by approximately 10%, and therefore the size of the negative electrode will be larger.

### 7. Slurry for formation of negative electrode

The slurry for the formation of the negative-electrode active material layer 3 includes the flaky graphite particles 7, the particulate graphite particles 8, the binder, the solvent and a thickener.

The slurry is prepared by dispersing the flaky graphite particles 7, the particulate graphite particles 8, the binder and the thickener in the solvent, and stirring and mixing the resulting dispersion. Since the slurry includes two types of graphite particles different in shape, that is, the flaky graphite particles 7 and the particulate graphite particles 8, occurrence of dilatancy can be suppressed when the slurry is applied onto the negative-electrode current collector, and therefore the thickness and the uniformity of the negative-electrode active material layer 3 can be controlled.

### Nonaqueous electrolyte secondary battery

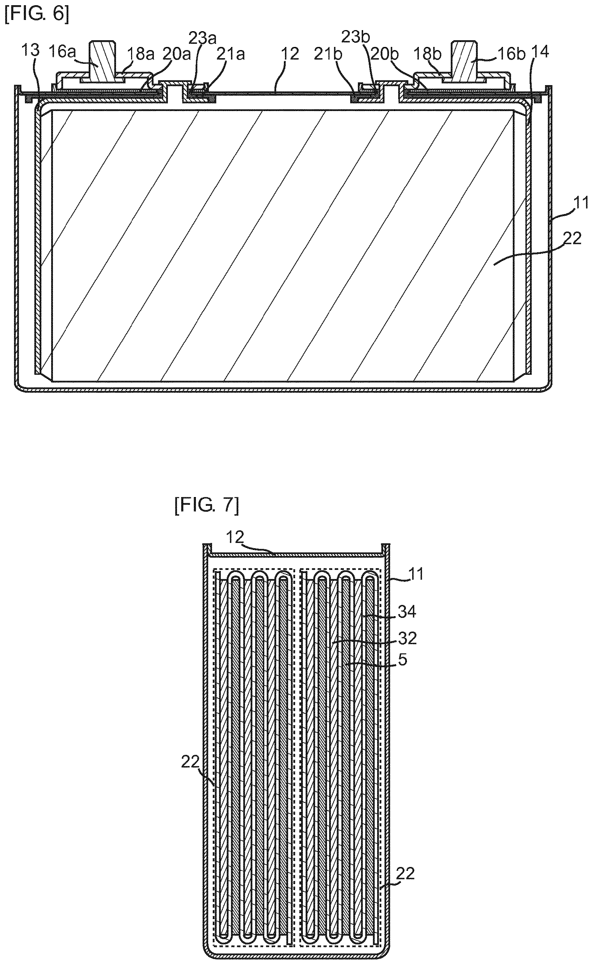

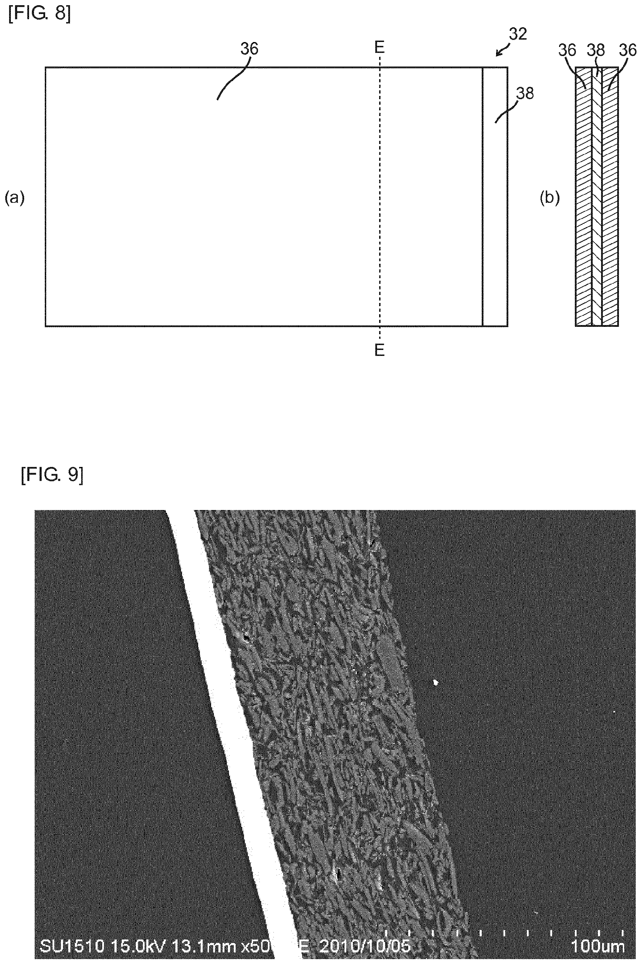

Fig. 4 is a schematic top view of a nonaqueous electrolyte secondary battery of the present embodiment. Fig. 5 is a schematic side view of the nonaqueous electrolyte secondary battery of the present embodiment. Fig. 6 is a schematic cross sectional view of the nonaqueous electrolyte secondary battery taken along a dotted line C-C in Fig. 4. Fig. 7 is a schematic cross sectional view of the nonaqueous electrolyte secondary battery taken along a dotted line D-D in Fig. 5. Fig. 8 (a) is a schematic plan view of a positive electrode included in the nonaqueous electrolyte secondary battery of the present embodiment. Fig. 8 (b) is a schematic cross sectional view of the positive electrode taken along a dotted line E-E in Fig. 8 (a).

The nonaqueous electrolyte secondary battery of the present embodiment comprises: the negative electrode 5 for a nonaqueous electrolyte secondary battery of the present embodiment; a positive electrode 32; a separator 34 interposed between the negative electrode 5 and the positive electrode 32; an organic electrolytic solution; a battery case 11 for containing the negative electrode 5, the positive electrode 32, the separator 34 and the organic electrolytic solution; a positive-electrode connection terminal 13; and a negative-electrode connection terminal 14, characterized in that the positive electrode 32 is electrically connected to the positive-electrode connection terminal 13, and the negative electrode 5 is electrically connected to the negative-electrode connection terminal 14.

Hereinafter, components other than the negative electrode 5 for the nonaqueous electrolyte secondary battery of the present embodiment and a method for producing the nonaqueous electrolyte secondary battery will be described.

### 1. Positive electrode

The positive electrode 32 may have a structure in which a positive-electrode active material layer 36 is provided on a positive-electrode current collector 38.

The positive-electrode current collector 38 is not particularly limited as long as it has electrical conductivity and it can have the positive-electrode active material layer 36 on a surface thereof, and examples thereof include metal foil. Preferably, the positive-electrode current collector 38 is aluminum foil.

The positive-electrode active material layer 36 is provided on the positive-electrode current collector 38 and can include the positive-electrode active material, a conductive agent and a binder.

The positive-electrode active material layer 36 can be formed by applying and drying a slurry obtained by mixing the positive-electrode active material, the conductive agent and the binder on the positive-electrode current collector 38.

As the positive-electrode active material included in the positive-electrode active material layer 36, those generally used in lithium-ion secondary batteries are usable. Examples thereof include LiCoO2, LiNiO2, LiNi(1-y)CoyO2, LiMnO2, LiMn2O4, LiFeO2 and substances having an olivine-type structure.

Especially, it is particularly preferable to use a lithium metal phosphate compound, which is a substance having an olivine-type structure, represented by the general formula LixFeyA(1-y)PO4, wherein 0 < x ≤ 2, 0 < y ≤ 1, and A is a metal element selected from Ti, Zn, Mg, Co and Mn.

As the conductive agent, carbon selected from acetylene black, furnace black and carbon black can be used.

In the preparation of the positive electrode 32, a binder is used for binding the positive-electrode current collector 38, the positive-electrode active material and the conductive agent together. Examples of the binder include organic solvent-based binders such as polyvinylidene fluoride (PVdF) and polytetrafluoroethylene (PTFE), which are dissolved in an organic solvent for use; water dispersible styrene-butadiene rubber; esters of ethylenically unsaturated carboxylic acid such as methyl (meth)acrylate, ethyl (meth)acrylate, butyl (meth)acrylate, (meth)acrylonitrile and hydroxyethyl (meth)acrylate; ethylenically unsaturated carboxylic acids such as acrylic acids, methacrylic acid, itaconic acid, fumaric acid and maleic acid; and water-based polymers such as carboxymethylcellulose (CMC). These binders may be used independently, or two or more kinds may be used as a mixture. Examples of the solvent for dissolving the binder include dimethylformamide, N-methylpyrrolidone, isopropanol, toluene and water, from which one or more kinds may be selected as appropriate and as needed.

### 2. Separator

As the separator 34, for example, nonwoven fabric, cloth, micropore films and the like which are composed mainly of polyolefin such as polyethylene and polypropylene may be used.

### 3. Organic electrolytic solution

Examples of the organic solvent of the organic electrolytic solution included in the nonaqueous electrolyte secondary battery 30 of the present embodiment include ethers, ketones, lactones, sulfolane-based compounds, esters and carbonates. Representative examples thereof include tetrahydrofuran, 2-methyl-tetrahydrofuran, -butyrolactone, acetonitrile, dimethoxyethane, diethyl carbonate, propylene carbonate, ethylene carbonate, dimethyl sulfoxide, sulfolane, 3-methyl-sulfolane, ethyl acetate and methyl propionate, and a mixed solvent thereof.

An electrolyte of the organic electrolytic solution included in the nonaqueous electrolyte secondary battery 30 of the present embodiment is not particularly limited, and LiBF4, LiAsF6, LiPF6, LiClO4, CF3SO3Li, LiBOB and the like may be used. Especially, LiBF4, LiClO4, LiPF6 and LiBOB are preferable in terms of battery characteristics and the safety in handling.

In addition, additives may be added to the organic electrolytic solution as needed. In terms of improvement in the charge and discharge characteristics, it is preferable to use one or more additives selected from cyclic carbonates having an unsaturated bond or a halogen atom and S=O bond-containing compounds.

Examples of the cyclic carbonates having an unsaturated bond or a halogen atom include vinylene carbonate, fluoroethylene carbonate and vinylethylene carbonate.

Examples of the S=O bond-containing compounds include 1,3-propane sultone (PS), 1,3-propene sultone (PRS), 1,4-butanediol dimethanesulfonate, divinyl sulfone, 2-propynyl methanesulfonate, pentafluoro methanesulfonate, ethylene sulfite, vinylethylene sulfite, vinylene sulfite, methyl 2-propynyl sulfite, ethyl 2-propynyl sulfite, dipropynyl sulfite, cyclohexyl sulfite and ethylene sulfate. In particular, 1,3-propane sultone, divinyl sulfone, 1,4-butanediol methanesulfonate and ethylene sulfite are preferable.

These compounds may be used independently, or two or more kinds may be used in combination.

### 4. Method for producing nonaqueous electrolyte secondary battery

First, the positive-electrode connection terminal 13, the negative-electrode connection terminal 14, external connection terminals 18 and screw members 16 are attached to a lid member 12 via internal insulating members 21, external insulating members 20 and packings 23 to give a battery lid with terminals.

Meanwhile, the positive electrode 32 and the negative electrode 5 are stacked alternately with the separator 34 interposed therebetween to give a power generation element 22.

Thereafter, the positive-electrode current collector 38 and the positive-electrode connection terminal 13 of the positive electrode 32 are connected, and the negative-electrode current collector 1 and the negative-electrode connection terminal 14 of the negative electrode 5 are connected, thereby to connect the power generation element 22 to the battery lid with terminals. The battery lid to which the power generation element 22 has been connected is coupled with the battery case 11 containing the organic electrolytic solution, and the lid member 12 and the battery case 11 are joined. Thus, the nonaqueous electrolyte secondary battery can be produced.

### Negative electrode preparation experiment

### (Example 1)

Flaky graphite particles in an amount of 50 parts by mass formed by graphitizing needle coke, particulate graphite particles in an amount of 50 parts by mass formed by graphitizing coke and surface-coated with graphite, SBR in an amount of 5 parts by mass and CMC in an amount of 1 part by mass as binders, and water as a solvent were used and mixed to give a negative electrode slurry. The negative electrode slurry was applied onto copper foil using a coater and dried at 150°C to give a negative electrode.

### (Comparative Example 1)

Flaky graphite particles in an amount of 100 parts by mass formed by graphitizing needle coke, SBR in an amount of 5 parts by mass and CMC in an amount of 1 part by mass as binders, and water as a solvent were used and mixed to give a negative electrode slurry. The negative electrode slurry was applied onto copper foil using a coater and dried at 150°C to give a negative electrode.

In Comparative Example 1 in which only flaky graphite particles were used, dilatancy occurred in the slurry during the application of the negative electrode slurry onto the copper foil, and it was therefore impossible to control the thickness and the uniformity of a negative-electrode active material layer after the coating. As a result, in Comparative Example 1, it was impossible to form the negative-electrode active material layer into an appropriate thickness and into a uniform thickness.

In Example 1 in which two types of graphite particles, that is, the flaky graphite particles and the particulate graphite particles were used, however, the dilatancy did not occur in the slurry during the application of the negative electrode slurry onto the copper foil. As a result, in Example 1, it was possible to control the thickness and the uniformity of the negative-electrode active material layer, and it was possible to form a negative-electrode active material layer having an appropriate and uniform thickness.

The result indicates that the occurrence of the dilatancy during the application using a coater can be prevented by forming the slurry with two types of graphite particles, that is, the flaky graphite particles and the particulate graphite particles. The rationale therefor is unexplained, but this is assumedly because the particulate graphite particles get in spaces between the flaky graphite particles thereby to lessen the interaction between the flaky graphite particles.

### Graphite packing property evaluation experiment

The negative electrodes prepared in the negative electrode preparation experiment were observed with an SEM and evaluated for the graphite packing properties in the negative-electrode active material layer.

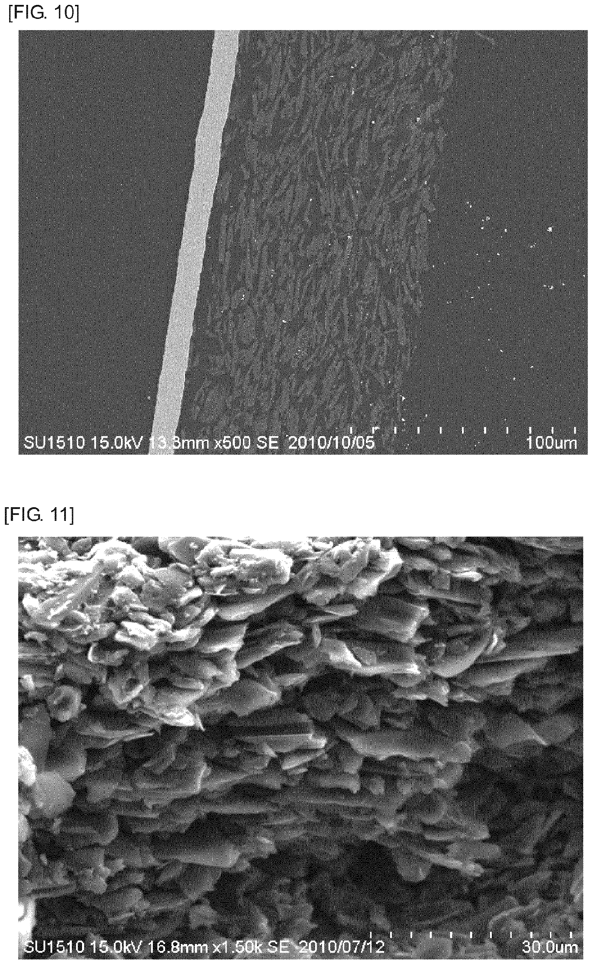

Fig. 9 is a photograph of a cross section of the negative electrode prepared in Example 1, and Fig. 10 is a photograph of a cross section of the negative electrode prepared in Comparative Example 1. These photographs show cross sections of the negative electrodes photographed by the SEM after the negative-electrode active material layers were hardened with epoxy resin. The particulate graphite particles and the flaky graphite particles can be distinguished from each other by comparing aspect ratios of the graphite particles on the photographs as shown in Figs. 9 and 10.

Fig. 9 shows that the flaky graphite particles having a long and narrow cross section are arranged substantially in parallel with the upper surface of the negative-electrode current collector, and the particulate graphite particles having a smaller aspect ratio are distributed in voids between the flaky graphite particles. It is also shown that in the negative-electrode active material layer in Fig. 9, no large void is present between the graphite particles and voids having substantially the same size are present substantially evenly. The observation indicates that the negative electrode prepared in Example 1 has a high graphite packing density in the negative-electrode active material layer.

Fig. 10 shows that approximately half of the flaky graphite particles having a long and narrow cross section are arranged substantially in parallel with the upper surface of the negative-electrode current collector, but there are a large number of particles which cannot be considered as being arranged substantially in parallel with the upper surface of the negative-electrode current collector. It is also shown that in the negative-electrode active material layer in Fig. 10, large voids are present between the graphite particles and the size of the voids is non-uniform. It is further shown that the voids between the graphite particles in Fig. 10 are larger than the voids between the graphite particles in Fig. 9. The observation indicates that the graphite packing density in the negative-electrode active material layer of the negative electrode prepared in Comparative Example 1 is much lower than the graphite packing density in the negative-electrode active material layer of the negative electrode prepared in Example 1.

The rationale for the negative-electrode active material layer of Comparative Example 1 in which only the flaky graphite particles were used to fail to have a sufficient graphite packing density is unexplained, but this is assumedly because the flaky graphite particles are very hard and has least slippery nature as having edge portions. That is, a hard edge portion of a flaky graphite particle is easily caught on an edge portion of another flaky graphite particle, and therefore large voids are easily generated. It is therefore expected that when the negative-electrode active material layer is formed by merely applying the slurry, all the surfaces of the flaky graphite particles inside the negative-electrode active material layer cannot be oriented substantially in parallel with the surface of the negative-electrode current collector. As a result, the flaky graphite particles cannot provide a sufficient packing density and therefore cannot provide a thin layer thickness due to its flaky shape. Furthermore, even if the negative-electrode active material layer is pressed, the flaky graphite particles will not move due to the engagement between the edge portions. That is, it is impossible to make the graphite particles slide, and it is also impossible to eliminate the engagement by pulverizing the graphite particles, because the graphite particles are too hard to be crushed. As described above, in the negative-electrode active material layer including only the flaky graphite particles, the thickness of the negative-electrode active material layer and the graphite packing density cannot be controlled, assumedly because it is impossible to arrange all the surfaces of the flaky graphite particles substantially in parallel with the negative-electrode current collector.

In contrast, the negative-electrode active material layer of Example 1 in which the flaky graphite particles and the particulate graphite particles were used had a high graphite packing density, and the thickness thereof was able to be controlled. The rationale therefor is unexplained, but this is assumedly because the particulate graphite particles present between the flaky graphite particles function as a cushioning medium. That is, it is assumed that the particulate graphite particles have a particulate shape and are more slippery than the flaky graphite particles, lessening the engagement between the flaky graphite particles. It is also assumed that the coating of the edge portions of the particulate graphite particles with graphite further improved the slippery nature of the particulate graphite particles, and therefore the higher packing density was obtained.

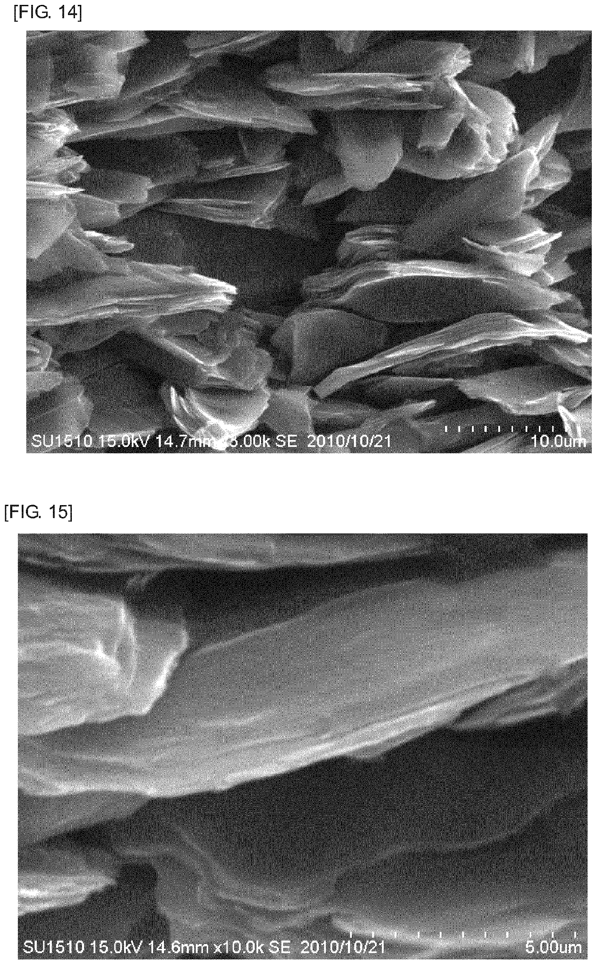

Fig. 11 is a photograph of a side surface of a part of the negative-electrode active material layer of the negative electrode prepared in Example 1 after the part of the negative-electrode active material layer was crushed. Figs. 12, 14 and 15 are photographs of a side surface of a part of the negative-electrode active material layer of the negative electrode prepared in Comparative Example 1 after the part of the negative-electrode active material layer was crushed. Fig. 13 is a photograph of an upper surface of the negative-electrode active material layer of the negative electrode prepared in Comparative Example 1.

Fig. 11 shows that the particulate graphite particles are present in the voids between the flaky graphite particles. In contrast, Fig. 12 shows that there are large voids between the flaky graphite particles.

The observation also indicates that the particulate graphite particles present between the flaky graphite particles made the flaky graphite particles more slippery to allow the flaky graphite particles to be oriented in the same direction and thereby increased the packing density.

The particle diameter of the flaky graphite particles in the in-plane direction can be measured in such a photograph as shown in Fig. 13. The thickness of the flaky graphite particles can be measured in such photographs as shown in Figs. 12, 14 and 15.

The average particle diameter can be calculated by averaging particle diameters in the in-plane direction of a plurality of flaky graphite particles, and the average thickness can be calculated by averaging thicknesses of a plurality of flaky graphite particles.

### Porosimetry experiment

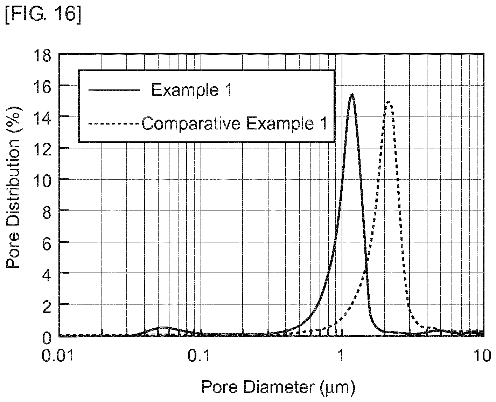

The pore distribution in the negative-electrode active material layer of the negative electrode prepared in Example 1 and the pore distribution in the negative-electrode active material layer of the negative electrode prepared in Comparative Example 1 were measured using a porosimeter. Fig. 16 shows results of the measurement. In addition, Table 1 shows the average pore diameter and so on calculated from these measurement results. Fig. 16 shows that the negative-electrode active material layer of the negative electrode prepared in Example 1 has a lower pore volume and a lower porosity than the negative-electrode active material layer of the negative electrode prepared in Comparative Example 1, and the negative-electrode active material layer of the negative electrode prepared in Example 1 has a higher graphite packing rate than the negative-electrode active material layer of the negative electrode prepared in Comparative Example 1. It is indicated that the negative-electrode active material layer of the negative electrode prepared in Example 1 has a large number of pores having an appropriate pore diameter. It is therefore assumed that with such pores, the distribution of the electrolytic solution will not be blocked.

**Table 1**

| | Pore Volume (mL/g) | Pore Surface Area (m²/g) | Median Diameter(µm) | Mode Diameter(µm) | Porosity (%) | Thickness (µm) |
|---|---|---|---|---|---|---|
| Comparative Example 1 | 0.2903 | 0.63 | 2.08 | 2.13 | 46.9 | 110 |
| Example 1 | 0.184 | 1.24 | 1.13 | 1.16 | 38.5 | 82 |

### Evaluation of battery characteristics

Negative electrodes were prepared in the same manner as in Example 1 in the negative electrode preparation experiment except that the mixing ratio between the flaky graphite particles and the particulate graphite particles was varied. Sample 1 was prepared from 100 parts by mass of the flaky graphite particles and 0 parts by mass of the particulate graphite particles (the same as in Comparative Example 1), Sample 2 was prepared from 70 parts by mass of the flaky graphite particles and 30 parts by mass of the particulate graphite particles, Sample 3 was prepared from 60 parts by mass of the flaky graphite particles and 40 parts by mass of the particulate graphite particles, Sample 4 was prepared from 50 parts by mass of the flaky graphite particles and 50 parts by mass of the particulate graphite particles (the same as in Example 1), Sample 5 was prepared from 40 parts by mass of the flaky graphite particles and 60 parts by mass of the particulate graphite particles, Sample 6 was prepared from 30 parts by mass of the flaky graphite particles and 70 parts by mass of the particulate graphite particles, and Sample 7 was prepared from 20 parts by mass of the flaky graphite particles and 80 parts by mass of the particulate graphite particles. Other than that, the negative electrodes (Samples 1 to 7) were prepared in the same manner as in Example 1. The total amounts of the graphite particles in Samples 1 to 7 were the same.

The thickness (µm) of the negative-electrode active material layers of Samples 1 to 7 prepared was measured. In addition, the porosity (%) and the graphite packing density (g/cm3) in the negative-electrode active material layers of Samples 1 to 7 were measured in the same manner as in the "Porosimetry experiment" using a porosimeter.

Next, lithium secondary batteries were prepared with the respective negative electrodes of Samples 1 to 7 and evaluated for the input characteristics. The lithium secondary batteries were produced in the following manner. The lithium secondary batteries prepared by using the negative electrodes of Samples 1 to 7 will be referred to as secondary batteries of Samples 1 to 7, respectively.

Positive electrode: LiFePO4 as a positive-electrode active material, a binder and a conductive agent were put into a solvent and mixed to give a positive electrode slurry. The positive electrode slurry was applied onto aluminum foil using a coater and dried at 150°C to give a positive electrode.

Electrolytic solution: An electrolytic solution obtained by adding 1.2 M of LiPF6 as an electrolyte, and 0.5 wt% of propane sultone (PS) and 0.5 wt% of vinylene carbonate as additives to 30 parts by mass of EC, 60 parts by mass of DEC and 10 parts by mass of MEC was used.

A polyolefin microporous film was used as a separator.

A plurality of sheets of the positive electrode and the negative electrode were stacked with the separator interposed therebetween to form a multilayered power generation element.

The power generation element was put in a stainless case, and the case was filled with the electrolytic solution, and then closed with a lid member. On this occasion, the power generation element was joined to conductive connections and the conductive connections were connected to positive and negative electrode terminals provided outside the battery case, respectively, so that the current can be taken out.

The input characteristics of each of the secondary batteries of Samples 1 to 7 were evaluated by measuring the time taken for the input to reach 50 Ah under input conditions of 0°C and 0.5 C. Table 2 shows results of the measurement.

**Table 2**

| Flaky Graphite | : | Particulate Graphite | Thickness (*µ* m) | Porosity (%) | Packing Density (g/cm³) | Input Characteristics (hr) |
|---|---|---|---|---|---|---|
| 100:0 | | (Sample 1) | 112 | 46.9 | 0.884 | 1.75 |
| 70:30 | | (Sample 2) | 102 | 44.7 | 0.971 | 2.04 |
| 60:40 | | (Sample 3) | 90 | 40.9 | 1.008 | 2.95 |
| 50:50 | | (Sample 4) | 82 | 38.5 | 1.106 | 1.89 |
| 40:60 | | (Sample 5) | 79 | 37.2 | 1.149 | 2.32 |
| 30:70 | | (Sample 6) | 76 | 37.0 | 1.194 | 3.00 |
| 20:80 | | (Sample 7) | 74 | 36.5 | 1.227 | 4.73 |

Samples 1 and 7 are not according to the invention.

Table 2 indicates that the graphite packing density increases with decrease in the proportion of the flaky graphite particles, and the input characteristics of Samples 6 and 7 are poor. It is also indicated that Samples 2 to 5 have higher graphite packing densities and better input characteristics.

### Experiment of pressurization on negative-electrode active material layer

The upper surface of the negative-electrode active material layer prepared in Example 1 and the upper surface of the negative-electrode active material layer prepared in Comparative Example 1 were pressed at a pressure of 200 kg/cm² (19.6 MPa), and the rate of change in thickness of each negative-electrode active material layer was measured.

Whereas the rate of change in thickness of the negative-electrode active material layer prepared in Example 1 was 5%, the rate of change in thickness of the negative-electrode active material layer prepared in Comparative Example 1 was 26%. The rate of Sample 2 was 17%, the rate of Sample 3 was 9%, and the rate of Sample 5 was 5%.

The result indicates that it is possible to give a sufficiently high packing density to the negative-electrode active material layer of Example 1 at the time of the formation of the negative-electrode active material layer.

### EXPLANATION OF NUMERALS

1: Negative-electrode current collector
3: Negative-electrode active material layer
5: Negative electrode
7: Flaky graphite particle
8: Particulate graphite particle
10: Particle
11: Battery case
12: Lid member
13: Positive-electrode connection terminal
14: Negative-electrode connection terminal
16, 16a, 16b: Screw member
18, 18a, 18b: External connection terminal
20, 20a, 20b: External insulating member
21, 21a, 21b: Internal insulating member
22: Power generation element
23, 23a, 23b: Packing
30: Nonaqueous electrolyte secondary battery
32: Positive electrode
34: Separator
36: Positive-electrode active material layer
38: Positive-electrode current collector

## Claims

1. A negative electrode for a nonaqueous electrolyte secondary battery, comprising:
- a negative-electrode current collector; and
- a negative-electrode active material layer provided on the negative-electrode current collector, **characterized in that**:
- the negative-electrode active material layer includes: flaky graphite particles having an aspect ratio of 6 to 80, which are needle coke graphite; particulate graphite particles having an aspect ratio of no more than 4, which are graphitized coke; and a binder, and
- an average particle diameter of the particulate graphite particles is smaller than an average particle diameter of the flaky graphite particles in an in-plane direction,
- the flaky graphite particles have an average interlayer distance d(002) from 0.3365 to 0.3375 nm determined by X-Ray diffractometry,
- wherein said flaky graphite particles are arranged in such a manner that one surface of each flaky graphite particle is substantially in parallel with an upper surface of said negative-electrode current collector,
- wherein the negative-electrode active material layer has a graphite packing density of 0.95 g/cm³ to 1.19 g/cm³, a porosity of 37.0% to 45% and an average pore diameter of 1 µm to 1.2 µm, the graphite packing density and the porosity being measured by use of a porosimeter,
- wherein when an upper surface of the negative-electrode active material layer is pressed at a pressure of 200 kg/cm² (19.6 MPa), the negative-electrode active material layer has a thickness of 91% or more of a thickness of the negative-electrode active material layer not pressed.

2. The negative electrode according to claim 1, wherein the negative-electrode active material layer includes 40 percent by mass to 70 percent by mass of the flaky graphite particles and 30 percent by mass to 60 percent by mass of the particulate graphite particles where the total amount of the flaky graphite particles and the particulate graphite particles is 100 percent by mass.

3. The negative electrode according to any one of claims 1 to 2, wherein the flaky graphite particles have a 2 to 15 times as long average major diameter as the particulate graphite particles in a cross section of the negative-electrode active material layer perpendicular to an upper surface of the negative-electrode active material layer.

4. The negative electrode according to any one of claims 1 to 3, wherein the flaky graphite particles have a 0.8 to 1.5 times as large total cross sectional area as the particulate graphite particles in the cross section of the negative-electrode active material layer perpendicular to the upper surface of the negative-electrode active material layer.

5. The negative electrode according to any one of claims 1 to 4, wherein the flaky graphite particles have an average thickness of 0.2 µm to 4 µm and an average particle diameter in the in-plane direction of 6 µm to 30 µm.

6. The negative electrode according to any one of claims 1 to 5, wherein the particulate graphite particles have an average particle diameter larger than the average thickness of the flaky graphite particles and smaller than the average particle diameter in the in-plane direction of the flaky graphite particles.

7. The negative electrode according to claim 6, wherein the particulate graphite particles have an average particle diameter of 1 µm to 10 µm.

8. The negative electrode according to any one of claims 1 to 7, wherein at least a surface of an edge portion of each particulate graphite particle is coated with graphite.

9. A nonaqueous electrolyte secondary battery comprising:
- the negative electrode according to any one of claims 1 to 8;
- a positive electrode;
- a separator interposed between the negative electrode and the positive electrode;
- an organic electrolytic solution;
- a case for containing the negative electrode, the positive electrode, the separator and the organic electrolytic solution;
- a positive-electrode connection terminal; and
- a negative-electrode connection terminal, wherein
- the positive electrode is electrically connected to the positive-electrode connection terminal, and
- the negative electrode is electrically connected to the negative-electrode connection terminal.

10. The secondary battery according to claim 9, wherein
- the positive electrode includes a positive-electrode current collector and a positive-electrode active material layer provided on the positive-electrode current collector, and
- the positive-electrode active material layer contains an olivine-type lithium metal phosphate compound.

11. A method for producing a negative electrode according to any one of claims 1 to 8, for a nonaqueous electrolyte secondary battery, comprising the steps of:
- forming a slurry by mixing flaky graphite particles formed by graphitizing needle coke, particulate graphite particles formed by graphitizing coke, a binder and a solvent; and
- applying and drying the slurry on a negative-electrode current collector.

## Patentansprüche

1. Negative Elektrode für einen Akkumulator mit nichtwässrigem Elektrolyt, umfassend:
- einen Stromabnehmer der negativen Elektrode; und
- eine Schicht aus aktivem Material der negativen Elektrode, welche auf dem Stromabnehmer der negativen Elektrode bereitgestellt ist, **dadurch gekennzeichnet, dass**:
- die Schicht aus aktivem Material der negativen Elektrode beinhaltet: Partikel aus Schuppengraphit mit einem Formfaktor von 6 bis 80, welche Nadelkoksgraphit sind; stückige Graphitpartikel mit einem Formfaktor von nicht mehr als 4, welche graphitierter Koks sind; und ein Bindemittel, und
- ein durchschnittlicher Partikeldurchmesser der stückigen Graphitpartikel kleiner ist als ein durchschnittlicher Partikeldurchmesser der Partikel aus Schuppengraphit in einer In-Ebene-Richtung,
- die Partikel aus Schuppengraphit einen durchschnittlichen Zwischenschichtabstand d(002) von 0,3365 bis 0,3375 nm, bestimmt durch Röntgendiffraktometrie, aufweisen,
- wobei die Partikel aus Schuppengraphit auf eine solche Weise angeordnet sind, dass eine Oberfläche eines jeden Partikels aus Schuppengraphit im Wesentlichen parallel mit einer oberen Oberfläche des Stromabnehmer der negativen Elektrode ist,
- wobei die Schicht aus aktivem Material der negativen Elektrode eine Graphitpackungsdichte von 0,95 g/cm³ bis 1,19 g/cm³, eine Porosität von 37,0 % bis 45 % und einen durchschnittlichen Porendurchmesser von 1 µm bis 1,2 µm aufweist, wobei die Graphitpackungsdichte und die Porosität unter Verwendung eines Porosimeters gemessen werden.
- wobei, wenn eine obere Oberfläche der Schicht aus aktivem Material der negativen Elektrode bei einem Druck von 200 kg/cm² (19,6 MPa) gedrückt wird, die Schicht aus aktivem Material der negativen Elektrode eine Dicke von 91 % oder mehr einer Dicke der nicht gedrückten Schicht aus aktivem Material der negativen Elektrode aufweist.

2. Negative Elektrode nach Anspruch 1, wobei die Schicht aus aktivem Material der negativen Elektrode 40 Massenprozent bis 70 Massenprozent der Partikel aus Schuppengraphit und 30 Massenprozent bis 60 Massenprozent der stückigen Graphitpartikel beinhaltet, wobei die Gesamtmenge der Partikel aus Schuppengraphit und der stückigen Graphitpartikel 100 Massenprozent beträgt.

3. Negative Elektrode nach einem der Ansprüche 1 bis 2, wobei die Partikel aus Schuppengraphit in einem Querschnitt der Schicht aus aktivem Material der negativen Elektrode senkrecht zu einer oberen Oberfläche der Schicht aus aktivem Material der negativen Elektrode einen 2 bis 15 Mal längeren durchschnittlichen Hauptdurchmesser aufweisen als die stückigen Graphitpartikel.

4. Negative Elektrode nach einem der Ansprüche 1 bis 3, wobei die Partikel aus Schuppengraphit in einem Querschnitt der Schicht aus aktivem Material der negativen Elektrode senkrecht zu der oberen Oberfläche der Schicht aus aktivem Material der negativen Elektrode einen 0,8 bis 1,5 Mal größeren Gesamtquerschnittbereich aufweisen als die stückigen Graphitpartikel.

5. Negative Elektrode nach einem der Ansprüche 1 bis 4, wobei die Partikel aus Schuppengraphit eine durchschnittliche Dicke von 0,2 µm bis 4 µm und einen durchschnittlichen Partikeldurchmesser in der In-Ebene-Richtung von 6 µm bis 30 µm aufweisen.

6. Negative Elektrode nach einem der Ansprüche 1 bis 5, wobei die stückigen Graphitpartikel einen durchschnittlichen Partikeldurchmesser aufweisen, welcher größer als die durchschnittliche Dicke der Partikel aus Schuppengraphit und kleiner als der durchschnittliche Partikeldurchmesser in der In-Ebene-Richtung der Partikel aus Schuppengraphit ist.

7. Negative Elektrode nach Anspruch 6, wobei die stückigen Graphitpartikel einen durchschnittlichen Partikeldurchmesser von 1 µm bis 10 µm aufweisen.

8. Negative Elektrode nach einem der Ansprüche 1 bis 7, wobei zumindest eine Oberfläche eines Randabschnitts jedes stückigen Graphitpartikels mit Graphit beschichtet ist.

9. Akkumulator mit nichtwässrigem Elektrolyt, umfassend:
- die negative Elektrode nach einem der Ansprüche 1 bis 8,
- eine positive Elektrode;
- einen Separator, welcher zwischen der negativen Elektrode und der positiven Elektrode angeordnet ist;
- eine organische elektrolytische Lösung;
- ein Gehäuse zur Aufnahme der negativen Elektrode, der positiven Elektrode, des Separators und der organischen elektrolytischen Lösung;
- einen Verbindungsanschluss der positiven Elektrode; und
- einen Verbindungsanschluss der negativen Elektrode; wobei
- die positive Elektrode mit dem Verbindungsanschluss der positiven Elektrode elektrisch verbunden ist, und
- die negative Elektrode mit dem Verbindungsanschluss der negativen Elektrode elektrisch verbunden ist.

10. Akkumulator nach Anspruch 9, wobei
- die positive Elektrode einen Stromabnehmer der positiven Elektrode und eine Schicht aus aktivem Material der positiven Elektrode beinhaltet, welche auf dem Stromabnehmer der positiven Elektrode bereitgestellt ist, und
- die Schicht aus aktivem Material der positiven Elektrode eine Lithium-Metall-Phosphat-Verbindung vom Typ Olivin beinhaltet.

11. Erzeugungsverfahren für eine negative Elektrode nach einem der Ansprüche 1 bis 8 für einen Akkumulator mit nichtwässrigem Elektrolyt, umfassend die folgenden Schritte:
- Bilden eines Schlamms durch Mischen von Partikeln aus Schuppengraphit, welche durch Graphitglühen von Nadelkoks gebildet wurden, stückigen Graphitpartikeln, welche durch Graphitglühen von Koks gebildet wurden, eines Bindemittels und eines Lösungsmittels; und
- Aufbringen und Trocknen des Schlamms auf einem Stromabnehmer der negativen Elektrode.

## Revendications

1. Electrode négative pour une batterie secondaire à électrolyte non aqueux, comprenant :
- un collecteur de courant d'électrode négative ; et
- une couche de matériau actif d'électrode négative prévue sur le collecteur de courant d'électrode négative, **caractérisée en ce que** :
- la couche de matériau actif d'électrode négative inclut : des particules de graphite en paillettes ayant un rapport de forme de 6 à 80, lesquelles sont du graphite de coque en aiguilles ; des particules de graphite particulaire ayant un rapport de forme ne dépassant pas 4, qui sont du coke graphité ; et un liant, et
- un diamètre de particule moyen des particules de graphite particulaire est plus petit qu'un diamètre de particule moyen des particules de graphite en paillettes dans une direction dans le plan,
- les particules de graphite en paillettes ont une distance entre couches moyenne d(002) de 0,3365 à 0,3375 nm déterminée par diffractométrie aux rayons X,
- dans laquelle lesdites particules de graphite en paillettes sont agencées de telle manière qu'une surface de chaque particule de graphite en paillettes est sensiblement en parallèle avec une surface supérieure dudit collecteur de courant d'électrode négative,
- dans laquelle la couche de matériau actif d'électrode négative a une densité de garnissage de graphite de 0,95 g/cm³ à 1,19 g/cm³, une porosité de 37,0 % à 45 % et un diamètre de pore moyen de 1 µm à 1,2 µm, la densité de tassement de graphite et la porosité étant mesurés au moyen d'un porosimètre,
- dans laquelle lorsqu'une surface supérieure de la couche de matériau actif d'électrode négative est pressée à une pression de 200 kg/cm² (19,6 MPa), la couche de matériau actif d'électrode négative a une épaisseur de 91 % ou plus d'une épaisseur de la couche de matériau actif d'électrode négative non pressée.

2. Electrode négative selon la revendication 1, dans laquelle la couche de matériau actif d'électrode négative inclut 40 % en masse à 70 % en masse des particules de graphite en paillettes et 30 % en masse à 60 % en masse des particules de graphite particulaire où la quantité totale des particules de graphite en paillettes et des particules de graphite particulaire est de 100 % en masse.

3. Electrode négative selon l'une quelconque des revendications 1 à 2, dans laquelle les particules de graphite en paillettes ont un diamètre majeur moyen de 2 à 15 fois aussi long que les particules de graphite particulaire dans une section transversale de la couche de matériau actif d'électrode négative perpendiculaire à une surface supérieure de la couche de matériau actif d'électrode négative.

4. Electrode négative selon l'une quelconque des revendications 1 à 3, dans laquelle les particules de graphite en paillettes ont une surface en section transversale totale de 0,8 à 1,5 fois aussi grande que les particules de graphite particulaire dans la section transversale de la couche de matériau actif d'électrode négative perpendiculaire à la surface supérieure de la couche de matériau actif d'électrode négative.

5. Electrode négative selon l'une quelconque des revendications 1 à 4, dans laquelle les particules de graphite en paillettes ont une épaisseur moyenne de 0,2 µm à 4 µm et un diamètre de particule moyen dans la direction dans le plan de 6 µm à 30 µm.

6. Electrode négative selon l'une quelconque des revendications 1 à 5, dans laquelle les particules de graphite particulaire ont un diamètre de particule moyen plus grand que l'épaisseur moyenne des particules de graphite en paillettes et plus petit que le diamètre de particule moyen dans la direction dans le plan des particules de graphite en paillettes.

7. Electrode négative selon la revendication 6, dans laquelle les particules de graphite particulaire ont un diamètre de particule moyen de 1 µm à 10 µm.

8. Electrode négative selon l'une quelconque des revendications 1 à 7, dans laquelle au moins une surface d'une partie de bord de chaque particule de graphite particulaire est revêtue de graphite.

9. Batterie secondaire à électrolyte non aqueux comprenant :
- l'électrode négative selon l'une quelconque des revendications 1 à 8 ;
- une électrode positive ;
- un séparateur intercalé entre l'électrode négative et l'électrode positive ;
- une solution électrolytique organique ;
- un boîtier pour contenir l'électrode négative, l'électrode positive, le séparateur et la solution électrolytique organique ;
- une borne de connexion d'électrode positive ; et
- une borne de connexion d'électrode négative, dans laquelle
- l'électrode positive est connectée électriquement à la borne de connexion d'électrode positive, et
- l'électrode négative est connectée électriquement à la borne de connexion d'électrode négative.

10. Batterie secondaire selon la revendication 9, dans laquelle
- l'électrode positive inclut un collecteur de courant d'électrode positive et une couche de matériau actif d'électrode positive prévue sur le collecteur de courant d'électrode positive, et
- la couche de matériau actif d'électrode positive contient un composé de phosphate de métal de lithium de type olivine.

11. Procédé de production d'une électrode négative selon l'une quelconque des revendications 1 à 8, pour une batterie secondaire à électrolyte non aqueux, comprenant les étapes de :
- formation d'une suspension en mélangeant des particules de graphite en paillettes formées par graphitation de coke en aiguilles, des particules de graphite particulaire formées par graphitation de coke, un liant et un solvant ; et
- application et séchage de la suspension sur un collecteur de courant d'électrode négative.
